# DEMANDE DE BREVET EUROPEEN

(11) **EP 1 961 916 A1**
(43) Date de publication de la demande: **27.08.2008**
(21) Numéro de dépôt: 08075115.9
(22) Date de dépôt: 13.02.2008
(51) Int. Cl.: F01D 5/14, F01D 9/04

(54) **Profil aérodynamique optimisé pour une aube de turbine**

(30) Priorité: 22.02.2007 FR 0701260
(71) Demandeur: SNECMA, 75015 Paris (FR)
(72) Inventeur: Lafarge, Grégory, 77320 Choisy en Brie (FR); Picot, Philippe, 77820 Le Chatelet en Brie (FR); Texier, Christophe Bernard, 77370 Rampillon (FR)
(74) Mandataire: Nguyen, Dominique

(57) **Abrégé**

Profil aérodynamique d'une aube fixe de distributeur de turbine à gas où, à froid et à l'état non revêtu, ledit profil aérodynamique est sensiblement identique à un profil nominal déterminé par les coordonnées cartésiennes X, Y, Z' données dans le tableau 1, dans lequel la coordonnée Z' est le quotient D/H où D est la distance du point considéré à un plan de référence P0 situé à la base du profil nominal et H est la hauteur de ce profil, mesurée depuis le plan de référence jusqu'au sommet de l'aube. Les mesures D et H sont prises radialement par rapport à l'axe de la turbine, tandis que la coordonnée X est mesurée dans la direction axiale de la turbine.

## Description

La présente invention concerne un profil aérodynamique d'aube de turbine.

En particulier, l'invention concerne le profil aérodynamique d'une aube fixe de distributeur de turbine à gaz et, plus particulièrement, une turbine haute pression du type utilisé dans une turbomachine d'aéronef.

Un tel profil doit permettre à la turbine d'assurer le rendement souhaité et, pour cela, il doit être tel que l'écoulement d'air autour de ce profil soit sain, c'est-à-dire sensiblement tel qu'il ne provoque pas de turbulences néfastes au rendement global. De plus, il doit supporter des contraintes mécaniques élevées et permettre la répartition de celles-ci dans l'aube de manière à éviter une usure prématurée de cette dernière. En d'autres termes, le profil aérodynamique doit permettre d'optimiser les performances aérodynamiques et mécaniques de l'aube.

Par ailleurs, le profil doit pouvoir s'implanter correctement sur les plates-formes intérieure et extérieure d'une aube complète et pouvoir être fabriqué sans difficulté excessive. En particulier, pour l'application à des turbomachines, le profil doit permettre l'implantation d'un circuit de refroidissement de manière à assurer l'intégrité thermique de l'aube, c'est-à-dire à éviter les zones de surchauffe, dans le domaine de fonctionnement du turboréacteur.

L'invention a pour but de proposer un profil aérodynamique d'aube de turbine optimisé, capable de répondre à ces objectifs.

Ce but est atteint grâce au fait que, à froid et à l'état non revêtu, ledit profil est sensiblement identique à un profil nominal déterminé par les coordonnées cartésiennes X,Y,Z' données dans le tableau 1, dans lequel la coordonnée Z' est le quotient D/H où D est la distance du point considéré à un plan X,Y de référence, situé à la base du profil nominal et H est la hauteur de ce profil, mesurée depuis ledit plan de référence jusqu'au sommet de l'aube, les mesures D et H étant prises radialement par rapport à l'axe de la turbine, tandis que la coordonnée X est mesurée dans la direction axiale de la turbine.

Ce profil a été déterminé après de nombreux essais et simulations. Il est défini à froid, c'est-à-dire à une température ambiante de 20°C. Il s'agit d'une température de référence, à laquelle le profil est déterminé géométriquement. Les objectifs d'optimisation aérodynamique et mécanique indiqués ci-dessus sont bien évidemment valables pour les conditions d'utilisation de ce profil aérodynamique, c'est-à-dire à chaud, à une température stabilisée en régime de croisière d'utilisation de la turbomachine dont fait partie la turbine.

Par ailleurs, le profil aérodynamique selon l'invention est défini à l'état non revêtu. Les aubes de turbine devant être soumises à des gradients de température élevée, il est fréquent qu'elles soient pourvues d'un revêtement ayant des propriétés thermiques leur permettant de supporter plus facilement ces variations de température. Le profil est déterminé avant la pose d'un tel revêtement.

I! est indiqué ci-dessus que le profit de l'invention est "sensiblement identique" au profil nominal. Ceci signifie que le profil peut très légèrement varier par rapport à ce profil nominal.

Le profil aérodynamique est ainsi de préférence défini dans une enveloppe de ± 1mm dans une direction normale à la surface du profil nominal.

Cette variation tient compte, en particulier, des tolérances de fabrication du profil.

Il est également préférable que les coordonnées X,Y du profil aérodynamique soient comprises dans la plage de ± 5% par rapport aux coordonnées X,Y du profil nominal.

Cette variation tient compte du calage du profil pour l'adapter à l'écoulement provenant de l'amont, de manière à améliorer encore le rendement de la turbine.

L'invention sera bien comprise et ses avantages apparaîtront mieux à la lecture de la description détaillée qui suit, d'un mode de réalisation représenté à titre d'exemple. La description se réfère aux dessins annexés sur lesquels :
- la figure 1 est une vue en perspective d'une aube fixe de distributeur de turbine à laquelle s'applique l'invention, le profil de l'aube étant représenté entre les plates-formes de l'aube ;et
- la figure 2 est une vue en perspective d'une turbomachine.

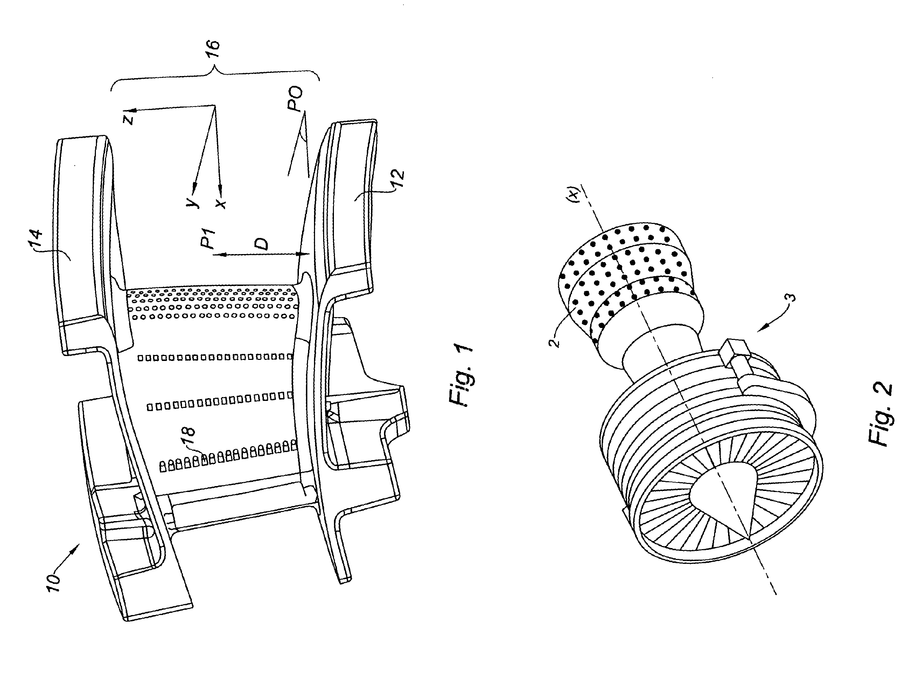

L'aube 10 représentée sur la figure 1 comporte une plate-forme intérieure 12 et une plate-forme extérieure 14 entre lesquelles s'étend un profil aérodynamique 16. Par convention, le profil aérodynamique est toute la partie de l'aube qui s'étend radialement à partir de la plate-forme intérieure 12 jusqu'à la plate-forme extérieure 14 de l'aube 10.

Sur la figure 1, le repère de coordonnées cartésiennes X, Y, Z est indiqué. La direction radiale Z est celle de la hauteur de l'aube, qui s'étend radialement, de la plate-forne intérieure 12 vers la plate-forme extérieure 14 de l'aube 10. Cette direction Z est perpendiculaire à la direction axiale X, qui est celle de l'axe géométrique de la turbomachine dans laquelle l'aube est destinée à être montée. La direction Y est perpendiculaire au plan X,Z.

La direction X est celle de l'axe de révolution de la turbine, lequel axe correspond également à l'axe de rotation de la turbomachine, tandis que la direction Y est la direction perpendiculaire à l'axe de révolution de la turbine, la direction Z étant radiale.

On voit que l'aube 10 est pourvu d'ouvertures 18 traversant sa paroi de l'intérieur vers l'extérieur de l'aube 10, qui peut être creuse, pour permettre son refroidissement par circulation d'air.

Le profil nominal à partir duquel est déterminé le profil aérodynamique de l'invention est défini dans le tableau de coordonnées ci-après, dans lequel la coordonnée Z', prise selon l'axe Z, est sans dimension et varie donc entre 0 et 1, tandis que les dimensions X et Y, respectivement prises selon les axes X et Y, sont exprimées en millimètres.

**Tableau 1**

| | | | | | | | | |
|---|---|---|---|---|---|---|---|---|
| -14.953 | -4.082 | 0.000 | 18.085 | 26.805 | 0.000 | -13.023 | -9.855 | 0.036 |
| -14.959 | -4.205 | 0.000 | 17.895 | 26.479 | 0.000 | -12.239 | -10.898 | 0.036 |
| -14.961 | -4.384 | 0.000 | 17.660 | 26.079 | 0.000 | -11.280 | -11.965 | 0.036 |
| -14.950 | -4.661 | 0.000 | 17.375 | 25.604 | 0.000 | -10.122 | -13.012 | 0.036 |
| -14.906 | -5.044 | 0.000 | 17.036 | 25.053 | 0.000 | -8.741 | -13.968 | 0.036 |
| -14.807 | -5.538 | 0.000 | 16.641 | 24.427 | 0.000 | -7.126 | -14.742 | 0.036 |
| -14.639 | -6.143 | 0.000 | 16.188 | 23.727 | 0.000 | -5.290 | -15.205 | 0.036 |
| -14.385 | -6.858 | 0.000 | 15.673 | 22.956 | 0.000 | -3.303 | -15.150 | 0.036 |
| -14.028 | -7.676 | 0.000 | 15.092 | 22.122 | 0.000 | -1.331 | -14.517 | 0.036 |
| -13.551 | -8.585 | 0.000 | 14.443 | 21.229 | 0.000 | 0.479 | -13.359 | 0.036 |
| -12.937 | -9.570 | 0.000 | 13.728 | 20.282 | 0.000 | 2.048 | -11.797 | 0.036 |
| -12.170 | -10.612 | 0.000 | 12.945 | 19.289 | 0.000 | 3.408 | -9.985 | 0.036 |
| -11.231 | -11.681 | 0.000 | 12.096 | 18.257 | 0.000 | 4.606 | -8.015 | 0.036 |
| -10.100 | -12.737 | 0.000 | 11.181 | 17.195 | 0.000 | 5.666 | -5.937 | 0.036 |
| -8.749 | -13.712 | 0.000 | 10.199 | 16.112 | 0.000 | 6.630 | -3.799 | 0.036 |
| -7.167 | -14.518 | 0.000 | 9.155 | 15.018 | 0.000 | 7.529 | -1.631 | 0.036 |
| -5.360 | -15.025 | 0.000 | 8.052 | 13.921 | 0.000 | 8.386 | 0.540 | 0.036 |
| -3.390 | -15.022 | 0.000 | 6.893 | 12.830 | 0.000 | 9.215 | 2.695 | 0.036 |
| -1.423 | -14.430 | 0.000 | 5.686 | 11.754 | 0.000 | 10.031 | 4.814 | 0.036 |
| 0.384 | -13.303 | 0.000 | 4.436 | 10.699 | 0.000 | 10.832 | 6.886 | 0.036 |
| 1.950 | -11.764 | 0.000 | 3.153 | 9.672 | 0.000 | 11.621 | 8.895 | 0.036 |
| 3.307 | -9.975 | 0.000 | 1.844 | 8.678 | 0.000 | 12.390 | 10.834 | 0.036 |
| 4.506 | -8.028 | 0.000 | 0.517 | 7.725 | 0.000 | 13.128 | 12.695 | 0.036 |
| 5.572 | -5.976 | 0.000 | -0.818 | 6.814 | 0.000 | 13.828 | 14.469 | 0.036 |
| 6.547 | -3.865 | 0.000 | -2.150 | 5.948 | 0.000 | 14.478 | 16.153 | 0.036 |
| 7.461 | -1.726 | 0.000 | -3.471 | 5.133 | 0.000 | 15.081 | 17.735 | 0.036 |
| 8.337 | 0.416 | 0.000 | -4.773 | 4.371 | 0.000 | 15.636 | 19.210 | 0.036 |
| 9.188 | 2.541 | 0.000 | -6.044 | 3.662 | 0.000 | 16.141 | 20.570 | 0.036 |
| 10.028 | 4.631 | 0.000 | -7.282 | 3.014 | 0.000 | 16.597 | 21.812 | 0.036 |
| 10.853 | 6.672 | 0.000 | -8.466 | 2.409 | 0.000 | 17.002 | 22.932 | 0.036 |
| 11.667 | 8.652 | 0.000 | -9.586 | 1.840 | 0.000 | 17.358 | 23.927 | 0.036 |
| 12.460 | 10.561 | 0.000 | -10.626 | 1.288 | 0.000 | 17.666 | 24.797 | 0.036 |
| 13.221 | 12.394 | 0.000 | -11.569 | 0.733 | 0.000 | 17.927 | 25.544 | 0.036 |
| 13.943 | 14.142 | 0.000 | -12.392 | 0.156 | 0.000 | 18.144 | 26.170 | 0.036 |
| 14.614 | 15.801 | 0.000 | -13.086 | -0.440 | 0.000 | 18.319 | 26.679 | 0.036 |
| 15.237 | 17.360 | 0.000 | -13.648 | -1.037 | 0.000 | 18.455 | 27.079 | 0.036 |
| 15.810 | 18.813 | 0.000 | -14.088 | -1.614 | 0.000 | 18.554 | 27.378 | 0.036 |
| 16.332 | 20.154 | 0.000 | -14.414 | -2.153 | 0.000 | 18.554 | 27.595 | 0.036 |
| 16.803 | 21.378 | 0.000 | -14.638 | -2.640 | 0.000 | 18.477 | 27.709 | 0.036 |
| 17.223 | 22.481 | 0.000 | -14.780 | -3.061 | 0.000 | 18.390 | 27.770 | 0.036 |
| 17.592 | 23.462 | 0.000 | -14.865 | -3.406 | 0.000 | 18.319 | 27.795 | 0.036 |
| 17.911 | 24.320 | 0.000 | -14.912 | -3.675 | 0.000 | 18.222 | 27.801 | 0.036 |
| 18.182 | 25.056 | 0.000 | -14.937 | -3.869 | 0.000 | 18.080 | 27.745 | 0.036 |
| 18.407 | 25.672 | 0.000 | -14.948 | -3.995 | 0.000 | 17.949 | 27.566 | 0.036 |
| 18.589 | 26.174 | 0.000 | -15.074 | -4.331 | 0.036 | 17.804 | 27.306 | 0.036 |
| 18.731 | 26.568 | 0.000 | -15.081 | -4.456 | 0.036 | 17.618 | 26.974 | 0.036 |
| 18.834 | 26.863 | 0.000 | -15.084 | -4.636 | 0.036 | 17.388 | 26.567 | 0.036 |
| 18.836 | 27.078 | 0.000 | -15.075 | -4.915 | 0.036 | 17.108 | 26.084 | 0.036 |
| 18.761 | 27.193 | 0.000 | -15.034 | -5.302 | 0.036 | 16.776 | 25.523 | 0.036 |
| 18.676 | 27.254 | 0.000 | -14.935 | -5.800 | 0.036 | 16.389 | 24.886 | 0.036 |
| 18.606 | 27.280 | 0.000 | -14.763 | -6.410 | 0.036 | 15.943 | 24.174 | 0.036 |
| 18.509 | 27.288 | 0.000 | -14.503 | -7.130 | 0.036 | 15.436 | 23.390 | 0.036 |
| 18.367 | 27.236 | 0.000 | -14.137 | -7.952 | 0.036 | 14.864 | 22.540 | 0.036 |
| 18.233 | 27.061 | 0.000 | -13.650 | -8.866 | 0.036 | 14.225 | 21.630 | 0.036 |
| 13.518 | 20.666 | 0.036 | 2.363 | -11.904 | 0.151 | 2.711 | 10.164 | 0.151 |
| 12.746 | 19.653 | 0.036 | 3.734 | -10.018 | 0.151 | 1.460 | 9.014 | 0.151 |
| 11.906 | 18.600 | 0.036 | 4.929 | -7.969 | 0.151 | 0.193 | 7.895 | 0.151 |
| 11.000 | 17.516 | 0.036 | 5.971 | -5.807 | 0.151 | -1.080 | 6.814 | 0.151 |
| 10.029 | 16.410 | 0.036 | 6.900 | -3.580 | 0.151 | -2.353 | 5.775 | 0.151 |
| 8.995 | 15.290 | 0.036 | 7.750 | -1.320 | 0.151 | -3.617 | 4.787 | 0.151 |
| 7.902 | 14.166 | 0.036 | 8.546 | 0.946 | 0.151 | -4.868 | 3.855 | 0.151 |
| 6.755 | 13.047 | 0.036 | 9.303 | 3.198 | 0.151 | -6.098 | 2.986 | 0.151 |
| 5.560 | 11.939 | 0.036 | 10.043 | 5.414 | 0.151 | -7.299 | 2.184 | 0.151 |
| 4.323 | 10.851 | 0.036 | 10.765 | 7.582 | 0.151 | -8.465 | 1.455 | 0.151 |
| 3.053 | 9.788 | 0.036 | 11.474 | 9.688 | 0.151 | -9.576 | 0.782 | 0.151 |
| 1.757 | 8.757 | 0.036 | 12.164 | 11.720 | 0.151 | -10.622 | 0.158 | 0.151 |
| 0.444 | 7.764 | 0.036 | 12.827 | 13.670 | 0.151 | -11.586 | -0.433 | 0.151 |
| -0.877 | 6.813 | 0.036 | 13.455 | 15.529 | 0.151 | -12.457 | -1.002 | 0.151 |
| -2.196 | 5.906 | 0.036 | 14.038 | 17.292 | 0.151 | -13.216 | -1.565 | 0.151 |
| -3.504 | 5.049 | 0.036 | 14.578 | 18.949 | 0.151 | -13.860 | -2.117 | 0.151 |
| -4.795 | 4.247 | 0.036 | 15.074 | 20.492 | 0.151 | -14.385 | -2.653 | 0.151 |
| -6.057 | 3.498 | 0.036 | 15.524 | 21.916 | 0.151 | -14.779 | -3.171 | 0.151 |
| -7.286 | 2.814 | 0.036 | 15.929 | 23.215 | 0.151 | -15.050 | -3.655 | 0.151 |
| -8.466 | 2.180 | 0.036 | 16.288 | 24.387 | 0.151 | -15.228 | -4.078 | 0.151 |
| -9.584 | 1.585 | 0.036 | 16.602 | 25.428 | 0.151 | -15.336 | -4.430 | 0.151 |
| -10.625 | 1.016 | 0.036 | 16.874 | 26.338 | 0.151 | -15.401 | -4.704 | 0.151 |
| -11.573 | 0.454 | 0.036 | 17.104 | 27.119 | 0.151 | -15.435 | -4.903 | 0.151 |
| -12.407 | -0.120 | 0.036 | 17.294 | 27.773 | 0.151- | -15.453 | -5.033 | 0.151 |
| -13.116 | -0.708 | 0.036 | 17.447 | 28.306 | 0.151 | -15.655 | -5.494 | 0.210 |
| -13.699 | -1.295 | 0.036 | 17.567 | 28.723 | 0.151 | -15.667 | -5.623 | 0.210 |
| -14.159 | -1.863 | 0.036 | 17.654 | 29.036 | 0.151 | -15.678 | -5.812 | 0.210 |
| -14.501 | -2.398 | 0.036 | 17.647 | 29.259 | 0.151 | -15.679 | -6.103 | 0.210 |
| -14.736 | -2.884 | 0.036 | 17.564 | 29.374 | 0.151 | -15.646 | -6.507 | 0.210 |
| -14.887 | -3.305 | 0.036 | 17.472 | 29.433 | 0.151 | -15.547 | -7.029 | 0.210 |
| -14.977 | -3.652 | 0.036 | 17.398 | 29.454 | 0.151 | -15.355 | -7.661 | 0.210 |
| -15.028 | -3.921 | 0.036 | 17.298 | 29.454 | 0.151 | -15.063 | -8.404 | 0.210 |
| -15.055 | -4.117 | 0.036 | 17.157 | 29.384 | 0.151 | -14.657 | -9.251 | 0.210 |
| -15.068 | -4.244 | 0.036 | 17.035 | 29.192 | 0.151 | -14.119 | -10.188 | 0.210 |
| -15.463 | -5.123 | 0.151 | 16.899 | 28.918 | 0.151 | -13.427 | -11.195 | 0.210 |
| -15.473 | -5.250 | 0.151 | 16.726 | 28.568 | 0.151 | -12.562 | -12.246 | 0.210 |
| -15.482 | -5.436 | 0.151 | 16.511 | 28.139 | 0.151 | -11.500 | -13.303 | 0.210 |
| -15.479 | -5.723 | 0.151 | 16.249 | 27.630 | 0.151 | -10.217 | -14.306 | 0.210 |
| -15.444 | -6.122 | 0.151 | 15.937 | 27.039 | 0.151 | -8.692 | -15.168 | 0.210 |
| -15.345 | -6.635 | 0.151 | 15.571 | 26.366 | 0.151 | -6.928 | -15.786 | 0.210 |
| -15.160 | -7.260 | 0.151 | 15.149 | 25.614 | 0.151 | -4.967 | -16.030 | 0.210 |
| -14.879 | -7.995 | 0.151 | 14.668 | 24.785 | 0.151 | -2.913 | -15.742 | 0.210 |
| -14.486 | -8.834 | 0.151 | 14.123 | 23.886 | 0.151 | -0.911 | -14.922 | 0.210 |
| -13.965 | -9.763 | 0.151 | 13.512 | 22.922 | 0.151 | 0.919 | -13.623 | 0.210 |
| -13.295 | -10.765 | 0.151 | 12.835 | 21.899 | 0.151 | 2.513 | -11.950 | 0.210 |
| -12.457 | -11.813 | 0.151 | 12.092 | 20.823 | 0.151 | 3.890 | -10.029 | 0.210 |
| -11.429 | -12.874 | 0.151 | 11.282 | 19.704 | 0.151 | 5.086 | -7.941 | 0.210 |
| -10.187 | -13.892 | 0.151 | 10.406 | 18.549 | 0.151 | 6.121 | -5.738 | 0.210 |
| -8.708 | -14.786 | 0.151 | 9.465 | 17.366 | 0.151 | 7.034 | -3.467 | 0.210 |
| -6.992 | -15.455 | 0.151 | 8.463 | 16.165 | 0.151 | 7.862 | -1.163 | 0.210 |
| -5.069 | -15.771 | 0.151 | 7.404 | 14.955 | 0.151 | 8.630 | 1.149 | 0.210 |
| -3.036 | -15.556 | 0.151 | 6.293 | 13.742 | 0.151 | 9.353 | 3.448 | 0.210 |
| -1.043 | -14.795 | 0.151 | 5.135 | 12.534 | 0.151 | 10.054 | 5.711 | 0.210 |
| 0.778 | -13.541 | 0.151 | 3.938 | 11.340 | 0.151 | 10.739 | 7.926 | 0.210 |
| 11.408 | 10.077 | 0.210 | -9.578 | 0.410 | 0.210 | 15.922 | 26.834 | 0.270 |
| 12.060 | 12.153 | 0.210 | -10.628 | -0.239 | 0.210 | 16.160 | 27.781 | 0.270 |
| 12.685 | 14.146 | 0.210 | -11.601 | -0.845 | 0.210 | 16.362 | 28.593 | 0.270 |
| 13.279 | 16.047 | 0.210 | -12.489 | -1.415 | 0.210 | 16.529 | 29.273 | 0.270 |
| 13.829 | 17.848 | 0.210 | -13.272 | -1.968 | 0.210 | 16.663 | 29.826 | 0.270 |
| 14.339 | 19.540 | 0.210 | -13.945 | -2.503 | 0.210 | 16.768 | 30.261 | 0.270 |
| 14.806 | 21.116 | 0.210 | -14.500 | -3.023 | 0.210 | 16.844 | 30.585 | 0.270 |
| 15230 | 22.570 | 0.210 | -14.919 | -3.533 | 0.210 | 16.834 | 30.815 | 0.270 |
| 15.610 | 23.897 | 0.210 | -15.207 | -4.016 | 0.210 | 16.745 | 30.930 | 0.270 |
| 15.948 | 25.093 | 0.210 | -15.398 | -4.440 | 0.210 | 16.648 | 30.987 | 0.270 |
| 16.243 | 26.156 | 0.210 | -15.516 | -4.794 | 0.210 | 16.571 | 31.005 | 0.270 |
| 16.498 | 27.085 | 0.210 | -15.586 | -5.071 | 0.210 | 16.468 | 30.997 | 0.270 |
| 16.713 | 27.882 | 0.210 | -15.624 | -5.272 | 0.210 | 16.329 | 30.915 | 0.270 |
| 16.891 | 28.550 | 0.210 | -15.644 | -5.403 | 0.210 | 16.215 | 30.711 | 0.270 |
| 17.035 | 29.093 | 0.210 | -15.842 | -5.840 | 0.270 | 16.088 | 30.423 | 0.270 |
| 17.146 | 29.519 | 0.210 | -15.856 | -5.971 | 0.270 | 15.925 | 30.057 | 0.270 |
| 17.228 | 29.838 | 0.210 | -15.869 | -6.162 | 0.270 | 15.724 | 29.607 | 0.270 |
| 17.219 | 30.065 | 0.210 | -15.873 | -6.457 | 0.270 | 15.476 | 29.073 | 0.270 |
| 17.133 | 30.179 | 0.210 | -15.842 | -6.867 | 0.270 | 15.181 | 28.452 | 0.270 |
| 17.039 | 30.237 | 0.210 | -15.742 | -7.394 | 0.270 | 14.835 | 27.745 | 0.270 |
| 16.963 | 30.257 | 0.210 | -15.544 | -8.035 | 0.270 | 14.434 | 26.954 | 0.270 |
| 16.861 | 30.253 | 0.210 | -15.241 | -8.785 | 0.270 | 13.975 | 26.083 | 0.270 |
| 16.722 | 30.177 | 0.210 | -14.823 | -9.640 | 0.270 | 13.454 | 25.136 | 0.270 |
| 16.603 | 29.979 | 0.210 | -14.268 | -10.584 | 0.270 | 12.869 | 24.120 | 0.270 |
| 16.473 | 29.697 | 0.210 | -13.555 | -11.597 | 0.270 | 12.219 | 23.040 | 0.270 |
| 16.305 | 29.339 | 0.210 | -12.663 | -12.650 | 0.270 | 11.502 | 21.903 | 0.270 |
| 16.097 | 28.900 | 0.210 | -11.569 | -13.702 | 0.270 | 10.718 | 20.719 | 0.270 |
| 15.842 | 28.377 | 0.210 | -10.247 | -14.689 | 0.270 | 9.869 | 19.494 | 0.270 |
| 15.539 | 27.771 | 0.210 | -8.678 | -15.521 | 0.270 | 8.957 | 18.238 | 0.270 |
| 15.184 | 27.081 | 0.210 | -6.871 | -16.088 | 0.270 | 7.984 | 16.958 | 0.270 |
| 14.772 | 26.309 | 0.210 | -4.876 | -16.265 | 0.270 | 6.955 | 15.664 | 0.270 |
| 14.302 | 25.459 | 0.210 | -2.804 | -15.910 | 0.270 | 5.876 | 14.362 | 0.270 |
| 13.770 | 24.535 | 0.210 | -0.793 | -15.036 | 0.270 | 4.753 | 13.061 | 0.270 |
| 13.173 | 23.545 | 0.210 | 1.045 | -13.696 | 0.270 | 3.592 | 11.767 | 0.270 |
| 12.510 | 22.492 | 0.210 | 2.649 | -11.990 | 0.270 | 2.403 | 10.487 | 0.270 |
| 11.780 | 21.386 | 0.210 | 4.035 | -10.035 | 0.270 | 1.192 | 9.228 | 0.270 |
| 10.984 | 20.233 | 0.210 | 5.232 | -7.912 | 0.270 | -0.032 | 7.997 | 0.270 |
| 10.122 | 19.042 | 0.210 | 6.263 | -5.670 | 0.270 | -1.264 | 6.801 | 0.270 |
| 9.196 | 17.822 | 0.210 | 7.164 | -3.359 | 0.270 | -2.496 | 5.646 | 0.270 |
| 8.209 | 16.581 | 0.210 | 7.972 | -1.013 | 0.270 | -3.722 | 4.542 | 0.270 |
| 7.166 | 15.327 | 0.210 | 8.715 | 1.342 | 0.270 | -4.939 | 3.499 | 0.270 |
| 6.072 | 14.069 | 0.210 | 9.409 | 3.683 | 0.270 | -6.141 | 2.524 | 0.270 |
| 4.932 | 12.813 | 0.210 | 10.076 | 5.990 | 0.270 | -7.321 | 1.625 | 0.270 |
| 3.755 | 11.567 | 0.210 | 10.726 | 8.247 | 0.270 | -8.474 | 0.807 | 0.270 |
| 2.548 | 10.337 | 0.210 | 11.360 | 10.441 | 0.270 | -9.586 | 0.068 | 0.270 |
| 1.318 | 9.130 | 0.210 | 11.976 | 12.559 | 0.270 | -10.643 | -0.603 | 0.270 |
| 0.074 | 7.952 | 0.210 | 12.567 | 14.591 | 0.270 | -11.626 | -1.223 | 0.270 |
| -1.177 | 6.811 | 0.210 | 13.128 | 16.530 | 0.270 | -12.528 | -1.797 | 0.270 |
| -2.428 | 5.711 | 0.210 | 13.647 | 18.366 | 0.270 | -13.334 | -2.339 | 0.270 |
| -3.672 | 4.662 | 0.210 | 14.129 | 20.091 | 0.270 | -14.033 | -2.861 | 0.270 |
| -4.904 | 3.671 | 0.210 | 14.570 | 21.698 | 0.270 | -14.615 | -3.366 | 0.270 |
| -6.119 | 2.746 | 0.210 | 14.969 | 23.180 | 0.270 | -15.057 | -3.869 | 0.270 |
| -7.308 | 1.892 | 0.210 | 15.327 | 24.532 | 0.270 | -15.361 | -4.350 | 0.270 |
| -8.466 | 1.117 | 0.210 | 15.645 | 25.751 | 0.270 | -15.565 | -4.776 | 0.270 |
| -15.691 | -5.132 | 0.270 | 16.222 | 31.698 | 0.329 | -15.902 | -8.700 | 0.388 |
| -15.767 | -5.412 | 0.270 | 16.118 | 31.688 | 0.329 | -15.581 | -9.465 | 0.388 |
| -15.808 | -5.615 | 0.270 | 15.980 | 31.600 | 0.329 | -15.139 | -10.333 | 0.388 |
| -15.830 | -5.748 | 0.270 | 15.869 | 31.390 | 0.329 | .14.553 | -11.290 | 0.388 |
| -16.025 | -6.160 | 0.329 | 15.746 | 31.096 | 0.329 | -13.800 | -12.312 | 0.388 |
| -16.040 | -6.292 | 0.329 | 15.588 | 30.722 | 0.329 | .12.859 | -13.366 | 0.388 |
| -16.055 | -6.486 | 0.329 | 15.392 | 30.262 | 0.329 | -11.704 | -14.407 | 0.388 |
| -16.061 | -6.784 | 0.329 | 15.151 | 29.716 | 0.329 | -10.310 | -15.363 | 0.388 |
| -16.032 | -7.200 | 0.329 | 14.864 | 29.081 | 0.329 | -8.661 | -16.134 | 0.388 |
| -15.931 | -7.734 | 0.329 | 14.526 | 28.358 | 0.329 | -6.781 | -16.609 | 0.388 |
| -15.726 | -8.381 | 0.329 | 14.135 | 27.550 | 0.329 | -4.729 | -16.663 | 0.388 |
| -15.414 | -9.139 | 0.329 | 13.685 | 26.659 | 0.329 | -2.626 | -16.193 | 0.388 |
| -14.983 | -10.001 | 0.329 | 13.175 | 25.690 | 0.329 | -0.599 | -15.225 | 0.388 |
| -14.412 | -10.952 | 0.329 | 12.602 | 24.649 | 0.329 | 1.255 | -13.813 | 0.388 |
| -13.679 | -11.969 | 0.329 | 11.963 | 23.542 | 0.329 | 2.881 | -12.048 | 0.388 |
| -12.762 | -13.023 | 0.329 | 11.258 | 22.377 | 0.329 | 4.285 | -10.035 | 0.388 |
| -11.637 | -14.070 | 0.329 | 10.487 | 21.161 | 0.329 | 5.492 | -7.848 | 0.388 |
| -10.278 | -15.042 | 0.329 | 9.649 | 19.904 | 0.329 | 6.520 | -5.539 | 0.388 |
| -8.667 | -15.842 | 0.329 | 8.749 | 18.614 | 0.329 | 7.407 | -3.157 | 0.388 |
| -6.822 | -16.363 | 0.329 | 7.789 | 17.297 | 0.329 | 8.188 | -0.738 | 0.388 |
| -4.797 | -16.476 | 0.329 | 6.773 | 15.964 | 0.329 | 8.893 | 1.691 | 0.388 |
| -2.708 | -16.060 | 0.329 | 5.708 | 14.622 | 0.329 | 9.541 | 4.107 | 0.388 |
| -0.689 | -15.137 | 0.329 | 4.599 | 13.279 | 0.329 | 10.153 | 6.491 | 0.388 |
| 1.157 | -13.759 | 0.329 | 3.454 | 11.941 | 0.329 | 10.745 | 8.823 | 0.388 |
| 2.772 | -12.023 | 0.329 | 2.280 | 10.615 | 0.329 | 11.318 | 11.091 | 0.388 |
| 4.166 | -10.037 | 0.329 | 1.085 | 9.309 | 0.329 | 11.873 | 13.282 | 0.388 |
| 5.368 | -7.880 | 0.329 | -0.123 | 8.029 | 0.329 | 12.404 | 15.385 | 0.388 |
| 6.396 | -5.604 | 0.329 | -1.339 | 6.784 | 0.329 | 12.905 | 17.390 | 0.388 |
| 7.288 | -3.255 | 0.329 | -2.555 | 5.580 | 0.329 | 13.369 | 19.290 | 0.388 |
| 8.081 | -0.871 | 0.329 | -3.767 | 4.428 | 0.329 | 13.799 | 21.074 | 0.388 |
| 8.803 | 1.522 | 0.329 | -4.971 | 3.338 | 0.329 | 14.192 | 22.735 | 0.388 |
| 9.472 | 3.903 | 0.329 | -6.164 | 2.319 | 0.329 | 14.547 | 24.267 | 0.388 |
| 10.109 | 6.250 | 0.329 | -7.338 | 1.379 | 0.329 | 14.865 | 25.664 | 0.388 |
| 10.728 | 8.547 | 0.329 | -8.487 | 0.524 | 0.329 | 15.147 | 26.923 | 0.388 |
| 11.330 | 10.779 | 0.329 | -9.600 | -0.246 | 0.329 | 15.392 | 28.042 | 0.388 |
| 11.914 | 12.935 | 0.329 | -10.663 | -0.937 | 0.329 | 15.602 | 29.020 | 0.388 |
| 12.474 | 15.004 | 0.329 | -11.660 | -1.566 | 0.329 | 15.780 | 29.858 | 0.388 |
| 13.004 | 16.977 | 0.329 | -12.576 | -2.145 | 0.329 | 15.927 | 30.561 | 0.388 |
| 13.494 | 18.847 | 0.329 | -13.402 | -2.680 | 0.329 | 16.045 | 31.132 | 0.388 |
| 13.949 | 20.603 | 0.329 | -14.124 | -3.191 | 0.329 | 16.136 | 31.580 | 0.388 |
| 14.365 | 22.238 | 0.329 | -14.730 | -3.683 | 0.329 | 16.204 | 31.915 | 0.388 |
| 14.741 | 23.746 | 0.329 | -15.194 | -4.178 | 0.329 | 16.190 | 32.151 | 0.388 |
| 15.079 | 25.121 | 0.329 | -15.513 | -4.659 | 0.329 | 16.097 | 32.267 | 0.388 |
| 15.377 | 26.361 | 0.329 | -15.729 | -5.086 | 0.329 | 15.995 | 32.322 | 0.388 |
| 15.638 | 27.463 | 0.329 | -15.862 | -5.445 | 0.329 | 15.916 | 32.337 | 0.388 |
| 15.862 | 28.426 | 0.329 | -15.943 | -5.727 | 0.329 | 15.811 | 32.323 | 0.388 |
| 16.051 | 29.252 | 0.329 | -15.988 | -5.933 | 0.329 | 15.674 | 32.230 | 0.388 |
| 16.208 | 29.943 | 0.329 | -16.011 | -6.067 | 0.329 | 15.566 | 32.015 | 0.388 |
| 16.333 | 30.506 | 0.329 | -16.203 | -6.454 | 0.388 | 15.447 | 31.715 | 0.388 |
| 16.431 | 30.948 | 0.329 | -16.219 | -6.588 | 0.388 | 15.293 | 31.333 | 0.388 |
| 16.503 | 31.278 | 0.329 | -16.236 | -6.784 | 0.388 | 15.102 | 30.864 | 0.388 |
| 16.491 | 31.510 | 0.329 | -16.243 | -7.086 | 0.388 | 14.868 | 30.307 | 0.388 |
| 16.399 | 31.626 | 0.329 | -16.216 | -7.506 | 0.388 | 14.588 | 29.659 | 0.388 |
| 16.300 | 31.682 | 0.329 | -16.113 | -8.047 | 0.388 | 14.258 | 28.921 | 0.388 |
| 13.874 | 28.096 | 0.388 | -4.673 | -16.828 | 0.447 | 6.503 | 16.463 | 0.447 |
| 13.435 | 27.186 | 0.388 | -2.558 | -16.309 | 0.447 | 5.461 | 15.048 | 0.447 |
| 12.934 | 26.195 | 0.388 | -0.522 | -15.300 | 0.447 | 4.375 | 13.628 | 0.447 |
| 12.371 | 25.131 | 0.388 | 1.340 | -13.857 | 0.447 | 3.254 | 12.212 | 0.447 |
| 11.744 | 23.999 | 0.388 | 2.977 | -12.067 | 0.447 | 2.104 | 10.806 | 0.447 |
| 11.050 | 22.806 | 0.388 | 4.391 | -10.029 | 0.447 | 0.932 | 9.418 | 0.447 |
| 10.289 | 21.562 | 0.388 | 5.606 | -7.815 | 0.447 | -0.253 | 8.056 | 0.447 |
| 9.463 | 20.274 | 0.388 | 6.636 | -5.478 | 0.447 | -1.446 | 6.729 | 0.447 |
| 8.574 | 18.950 | 0.388 | 7.520 | -3.065 | 0.447 | -2.642 | 5.445 | 0.447 |
| 7.626 | 17.600 | 0.388 | 8.294 | -0.614 | 0.447 | -3.837 | 4.214 | 0.447 |
| 6.622 | 16.231 | 0.388 | 8.986 | 1.846 | 0.447 | -5.027 | 3.047 | 0.447 |
| 5.569 | 14.851 | 0.388 | 9.617 | 4.295 | 0.447 | -6.210 | 1.957 | 0.447 |
| 4.472 | 13.468 | 0.388 | 10.209 | 6.711 | 0.447 | -7.380 | 0.951 | 0.447 |
| 3.340 | 12.089 | 0.388 | 10.777 | 9.077 | 0.447 | -8.530 | 0.038 | 0.447 |
| 2.179 | 10.721 | 0.388 | 11.325 | 11.377 | 0.447 | -9.651 | -0.781 | 0.447 |
| 0.998 | 9.372 | 0.388 | 11.853 | 13.599 | 0.447 | -10.728 | -1.511 | 0.447 |
| -0.197 | 8.049 | 0.388 | 12.358 | 15.732 | 0.447 | -11.750 | -2.155 | 0.447 |
| -1.400 | 6.760 | 0.388 | 12.833 | 17.767 | 0.447 | -12.695 | -2.741 | 0.447 |
| -2.604 | 5.513 | 0.388 | 13.272 | 19.695 | 0.447 | -13.555 | -3.271 | 0.447 |
| -3.806 | 4.319 | 0.388 | 13.679 | 21.504 | 0.447 | -14.315 | -3.765 | 0.447 |
| -5.001 | 3.187 | 0.388 | 14.051 | 23.189 | 0.447 | -14.963 | -4.237 | 0.447 |
| -6.187 | 2.130 | 0.388 | 14.387 | 24.743 | 0.447 | -15.465 | -4.718 | 0.447 |
| -7.357 | 1.154 | 0.388 | 14.687 | 26.160 | 0.447 | -15.811 | -5.198 | 0.447 |
| -8.506 | 0.268 | 0.388 | 14.952 | 27.437 | 0.447 | -16.046 | -5.629 | 0.447 |
| -9.622 | -0.529 | 0.388 | 15.184 | 28.571 | 0.447 | -16.193 | -5.993 | 0.447 |
| -10.691 | -1.241 | 0.388 | 15.382 | 29.563 | 0.447 | -16.283 | -6.281 | 0.447 |
| -11.702 | -1.876 | 0.388 | 15.549 | 30.413 | 0.447 | -16.334 | -6.491 | 0.447 |
| -12.631 | -2.459 | 0.388 | 15.687 | 31.125 | 0.447 | -16.360 | -6.628 | 0.447 |
| -13.476 | -2.991 | 0.388 | 15.798 | 31.704 | 0.447 | -16.543 | -6.966 | 0.506 |
| -14.218 | -3.492 | 0.383 | 15.384 | 32.159 | 0.447 | -16.562 | -7.103 | 0.506 |
| -14.846 | -3.973 | 0.388 | 15.947 | 32.498 | 0.447 | -16.581 | -7.302 | 0.506 |
| -15.330 | -4.461 | 0.388 | 15.932 | 32.736 | 0.447 | -16.591 | -7.610 | 0.506 |
| -15.663 | -4.941 | 0.388 | 15.837 | 32.853 | 0.447 | -16.565 | -8.039 | 0.506 |
| -15.889 | -5.370 | 0.388 | 15.734 | 32.907 | 0.447 | -16.459 | -8.591 | 0.506 |
| -16.029 | -5.732 | 0.388 | 15.652 | 32.920 | 0.447 | -16.236 | -9.256 | 0.506 |
| -16.115 | -6.017 | 0.388 | 15.547 | 32.904 | 0.447 | -15.899 | -10.032 | 0.506 |
| -16.163 | -6.224 | 0.388 | 15.411 | 32.806 | 0.447 | -15.435 | -10.912 | 0.506 |
| -16.188 | -6.360 | 0.388 | 15.306 | 32.586 | 0.447 | -14.821 | -11.878 | 0.506 |
| -16.375 | -6.723 | 0.447 | 15.190 | 32.281 | 0.447 | -14.033 | -12.906 | 0.506 |
| -16.393 | -6.858 | 0.447 | 15.040 | 31.892 | 0.447 | -13.046 | -13.959 | 0.506 |
| -16.411 | -7.056 | 0.447 | 14.854 | 31.414 | 0.447 | -11.837 | -14.987 | 0.506 |
| -16.420 | -7.361 | 0.447 | 14.625 | 30.846 | 0.447 | -10.379 | -15.911 | 0.506 |
| -16.393 | -7.786 | 0.447 | 14.352 | 30.186 | 0.447 | -8.664 | -16.625 | 0.506 |
| -16.289 | -8.332 | 0.447 | 14.029 | 29.434 | 0.447 | -6.720 | -17.019 | 0.506 |
| -16.072 | -8.992 | 0.447 | 13.654 | 28.592 | 0.447 | -4.622 | -16.968 | 0.506 |
| -15.743 | -9.762 | 0.447 | 13.222 | 27.664 | 0.447 | -2.492 | -16.403 | 0.506 |
| -15.289 | -10.637 | 0.447 | 12.731 | 26.654 | 0.447 | -0.448 | -15.354 | 0.506 |
| -14.689 | -11.599 | 0.447 | 12.178 | 25.567 | 0.447 | 1.422 | -13.881 | 0.506 |
| -13.918 | -12.624 | 0.447 | 11.561 | 24.411 | 0.447 | 3.068 | -12.067 | 0.506 |
| -12.953 | -13.679 | 0.447 | 10.877 | 23.193 | 0.447 | 4.492 | -10.004 | 0.506 |
| -11.770 | -14.713 | 0.447 | 10.128 | 21.921 | 0.447 | 5.714 | -7.767 | 0.506 |
| -10.343 | -15.653 | 0.447 | 9.312 | 20.603 | 0.447 | 6.749 | -5.404 | 0.506 |
| -8.660 | -16.395 | 0.447 | 8.434 | 19.249 | 0.447 | 7.632 | -2.966 | 0.506 |
| -6.748 | -16.828 | 0.447 | 7.496 | 17.866 | 0.447 | 8.401 | -0.488 | 0.506 |
| 9.085 | 2.000 | 0.506 | -5.049 | 2.918 | 0.506 | 13.865 | 23.969 | 0.566 |
| 9.702 | 4.477 | 0.506 | -6.232 | 1.801 | 0.506 | 14.167 | 25.560 | 0.566 |
| 10.277 | 6.920 | 0.506 | -7.404 | 0.769 | 0.506 | 14.436 | 27.011 | 0.566 |
| 10.826 | 9.314 | 0.506 | -8.560 | -0.166 | 0.506 | 14.674 | 28.319 | 0.566 |
| 11.352 | 11.642 | 0.506 | -9.687 | -1.003 | 0.506 | 14.880 | 29.480 | 0.566 |
| 11.857 | 13.891 | 0.506 | -10.772 | -1.749 | 0.506 | 15.057 | 30.495 | 0.566 |
| 12.338 | 16.051 | 0.506 | -11.806 | -2.402 | 0.506 | 15.206 | 31.365 | 0.566 |
| 12.788 | 18.112 | 0.506 | -12.764 | -2.990 | 0.506 | 15.329 | 32.094 | 0.566 |
| 13.204 | 20.063 | 0.506 | -13.638 | -3.520 | 0.506 | 15.427 | 32.687 | 0.566 |
| 13.589 | 21.895 | 0.506 | -14.415 | -4.007 | 0.506 | 15.504 | 33.152 | 0.566 |
| 13.942 | 23.601 | 0.506 | -15.079 | -4.473 | 0.506 | 15.560 | 33.499 | 0.566 |
| 14.260 | 25.173 | 0.506 | -15.598 | -4.949 | 0.506 | 15.543 | 33.742 | 0.566 |
| 14.544 | 26.608 | 0.506 | -15.957 | -5.430 | 0.506 | 15.445 | 33.860 | 0.566 |
| 14.794 | 27.900 | 0.506 | -16.201 | -5.862 | 0.506 | 15.339 | 33.912 | 0.566 |
| 15.013 | 29.048 | 0.506 | -16.353 | -6.229 | 0.506 | 15.255 | 33.923 | 0.566 |
| 15.199 | 30.051 | 0.506 | -16.447 | -6.519 | 0.506 | 15.148 | 33.903 | 0.566 |
| 15.357 | 30.911 | 0.506 | -16.499 | -6.731 | 0.506 | 15.015 | 33.795 | 0.566 |
| 15.487 | 31.632 | 0.506 | -16.527 | -6.870 | 0.506 | 14.916 | 33.566 | 0.566 |
| 15.591 | 32.218 | 0.506 | -16.706 | -7.184 | 0.566 | 14.804 | 33.251 | 0.566 |
| 15.672 | 32.678 | 0.506 | -16.725 | -7.322 | 0.566 | 14.661 | 32.849 | 0.566 |
| 15.730 | 33.022 | 0.506 | -16.745 | -7.522 | 0.566 | 14.484 | 32.356 | 0.566 |
| 15.717 | 33.264 | 0.506 | -16.756 | -7.834 | 0.566 | 14.265 | 31.769 | 0.566 |
| 15.620 | 33.384 | 0.506 | -16.730 | -8.267 | 0.566 | 14.003 | 31.086 | 0.566 |
| 15.515 | 33.437 | 0.506 | -16.622 | -8.823 | 0.566 | 13.693 | 30.309 | 0.566 |
| 15.432 | 33.449 | 0.506 | -16.394 | -9.492 | 0.566 | 13.332 | 29.438 | 0.566 |
| 15.325 | 33.431 | 0.506 | -16.050 | -10.274 | 0.566 | 12.916 | 28.476 | 0.566 |
| 15.190 | 33.324 | 0.506 | -15.576 | -11.159 | 0.566 | 12.441 | 27.429 | 0.566 |
| 15.088 | 33.099 | 0.506 | -14.949 | -12.129 | 0.566 | 11.906 | 26.303 | 0.566 |
| 14.974 | 32.789 | 0.506 | -14.144 | -13.159 | 0.566 | 11.308 | 25.102 | 0.566 |
| 14.828 | 32.393 | 0.506 | -13.137 | -14.211 | 0.566 | 10.643 | 23.837 | 0.566 |
| 14.647 | 31.907 | 0.506 | -11.903 | -15.231 | 0.566 | 9.913 | 22.514 | 0.566 |
| 14.423 | 31.330 | 0.506 | -10.417 | -16.139 | 0.566 | 9.117 | 21.144 | 0.566 |
| 14.155 | 30.658 | 0.506 | -8.674 | -16.825 | 0.566 | 8.258 | 19.733 | 0.566 |
| 13.839 | 29.893 | 0.506 | -6.709 | -17.183 | 0.566 | 7.339 | 18.291 | 0.566 |
| 13.471 | 29.036 | 0.506 | -4.597 | -17.089 | 0.566 | 6.365 | 16.827 | 0.566 |
| 13.048 | 28.091 | 0.506 | -2.460 | -16.488 | 0.566 | 5.340 | 15.349 | 0.566 |
| 12.565 | 27.062 | 0.506 | -0.410 | -15.412 | 0.566 | 4.271 | 13.865 | 0.566 |
| 12.022 | 25.955 | 0.506 | 1.469 | -13.917 | 0.566 | 3.165 | 12.384 | 0.566 |
| 11.414 | 24.776 | 0.506 | 3.128 | -12.086 | 0.566 | 2.029 | 10.914 | 0.566 |
| 10.740 | 23.533 | 0.506 | 4.565 | -10.005 | 0.566 | 0.870 | 9.462 | 0.566 |
| 10.001 | 22.236 | 0.506 | 5.799 | -7.748 | 0.566 | -0.305 | 8.036 | 0.566 |
| 9.195 | 20.891 | 0.506 | 6.842 | -5.363 | 0.566 | -1.491 | 6.647 | 0.566 |
| 8.327 | 19.508 | 0.506 | 7.730 | -2.901 | 0.566 | -2.682 | 5.304 | 0.566 |
| 7.399 | 18.094 | 0.506 | 8.500 | -0.398 | 0.566 | -3.875 | 4.016 | 0.566 |
| 6.416 | 16.660 | 0.506 | 9.179 | 2.117 | 0.566 | -5.067 | 2.797 | 0.566 |
| 5.383 | 15.212 | 0.506 | 9.789 | 4.620 | 0.566 | -6.255 | 1.658 | 0.566 |
| 4.307 | 13.759 | 0.506 | 10.353 | 7.091 | 0.566 | -7.433 | 0.607 | 0.566 |
| 3.194 | 12.309 | 0.506 | 10.886 | 9.512 | 0.566 | -8.596 | -0.345 | 0.566 |
| 2.053 | 10.869 | 0.506 | 11.395 | 11.867 | 0.566 | -9.732 | -1.197 | 0.566 |
| 0.889 | 9.448 | 0.506 | 11.880 | 14.143 | 0.566 | -10.827 | -1.955 | 0.566 |
| -0.289 | 8.052 | 0.506 | 12.340 | 16.329 | 0.566 | -11.871 | -2.618 | 0.566 |
| -1.477 | 6.691 | 0.506 | 12.768 | 18.414 | 0.566 | -12.843 | -3.207 | 0.566 |
| -2.668 | 5.375 | 0.506 | 13.164 | 20.389 | 0.566 | -13.730 | -3.738 | 0.566 |
| -3.860 | 4.113 | 0.506 | 13.530 | 22.243 | 0.566 | -14.521 | -4.222 | 0.566 |
| -15.199 | -4.683 | 0.566 | 15.430 | 33.918 | 0.625 | -17.058 | -7.886 | 0.684 |
| -15.732 | -5.155 | 0.566 | 15.413 | 34.163 | 0.625 | -17.069 | -8.202 | 0.684 |
| -16.101 | -5.636 | 0.566 | 15.314 | 34.281 | 0.625 | -17.042 | -8.641 | 0.684 |
| -16.352 | -6.070 | 0.566 | 15.206 | 34.333 | 0.625 | -16.929 | -9.205 | 0.684 |
| -16.510 | -6.440 | 0.566 | 15.121 | 34.343 | 0.625 | -16.693 | -9.883 | 0.684 |
| -16.606 | -6.732 | 0.566 | 15.013 | 34.321 | 0.625 | -16.335 | -10.673 | 0.684 |
| -16.661 | -6.947 | 0.566 | 14.881 | 34.209 | 0.625 | -15.844 | -11.565 | 0.684 |
| -16.689 | -7.087 | 0.566 | 14.785 | 33.976 | 0.625 | -15.194 | -12.542 | 0.684 |
| -16.864 | -7.376 | 0.625 | 14.675 | 33.656 | 0.625 | -14.359 | -13.573 | 0.684 |
| -16.884 | -7.515 | 0.625 | 14.535 | 33.248 | 0.625 | -13.316 | -14.619 | 0.684 |
| -16.904 | -7.717 | 0.625 | 14.362 | 32.748 | 0.625 | -12.038 | -15.623 | 0.684 |
| -16.915 | -8.031 | 0.625 | 14.147 | 32.152 | 0.625 | -10.504 | -16.500 | 0.684 |
| -16.889 | -8.467 | 0.625 | 13.890 | 31.460 | 0.625 | -8.712 | -17.137 | 0.684 |
| -16.778 | -9.027 | 0.625 | 13.586 | 30.671 | 0.625 | -6.706 | -17.430 | 0.684 |
| -16.546 | -9.701 | 0.625 | 13.231 | 29.786 | 0.625 | -4.566 | -17.263 | 0.684 |
| -16.195 | -10.487 | 0.625 | 12.822 | 28.810 | 0.625 | -2.412 | -16.599 | 0.684 |
| -15.712 | -11.376 | 0.625 | 12.355 | 27.747 | 0.625 | -0.349 | -15.472 | 0.684 |
| -15.073 | -12.350 | 0.625 | 11.828 | 26.602 | 0.625 | 1.545 | -13.939 | 0.684 |
| -14.253 | -13.381 | 0.625 | 11.237 | 25.382 | 0.625 | 3.226 | -12.077 | 0.684 |
| -13.227 | -14.430 | 0.625 | 10.582 | 24.095 | 0.625 | 4.688 | -9.968 | 0.684 |
| -11.970 | -15.443 | 0.625 | 9.861 | 22.750 | 0.625 | 5.947 | -7.680 | 0.684 |
| -10.459 | -16.335 | 0.625 | 9.074 | 21.355 | 0.625 | 7.013 | -5.263 | 0.684 |
| -8.690 | -16.996 | 0.625 | 8.224 | 19.919 | 0.625 | 7.919 | -2.765 | 0.684 |
| -6.703 | -17.320 | 0.625 | 7.313 | 18.451 | 0.625 | 8.699 | -0.224 | 0.684 |
| -4.576 | -17.187 | 0.625 | 6.346 | 16.960 | 0.625 | 9.383 | 2.330 | 0.684 |
| -2.430 | -16.552 | 0.625 | 5.328 | 15.454 | 0.625 | 9.989 | 4.874 | 0.684 |
| -0.373 | -15.448 | 0.625 | 4.265 | 13.943 | 0.625 | 10.541 | 7.387 | 0.684 |
| 1.513 | -13.933 | 0.625 | 3.164 | 12.434 | 0.625 | 11.055 | 9.849 | 0.684 |
| 3.184 | -12.085 | 0.625 | 2.031 | 10.937 | 0.625 | 11.539 | 12.246 | 0.684 |
| 4.633 | -9.989 | 0.625 | 0.874 | 9.459 | 0.625 | 11.994 | 14.565 | 0.684 |
| 5.878 | -7.714 | 0.625 | -0.301 | 8.009 | 0.625 | 12.419 | 16.792 | 0.684 |
| 6.932 | -5.311 | 0.625 | -1.489 | 6.596 | 0.625 | 12.811 | 18.917 | 0.684 |
| 7.827 | -2.829 | 0.625 | -2.684 | 5.231 | 0.625 | 13.170 | 20.929 | 0.684 |
| 8.600 | -0.305 | 0.625 | -3.882 | 3.923 | 0.625 | 13.503 | 22.818 | 0.684 |
| 9.280 | 2.231 | 0.625 | -5.081 | 2.686 | 0.625 | 13.808 | 24.577 | 0.684 |
| 9.885 | 4.756 | 0.625 | -6.277 | 1.531 | 0.625 | 14.081 | 26.198 | 0.684 |
| 10.441 | 7.250 | 0.625 | -7.465 | 0.466 | 0.625 | 14.326 | 27.676 | 0.684 |
| 10.963 | 9.693 | 0.625 | -8.637 | -0.500 | 0.625 | 14.542 | 29.007 | 0.684 |
| 11.457 | 12.070 | 0.625 | -9.784 | -1.363 | 0.625 | 14.729 | 30.190 | 0.684 |
| 11.926 | 14.369 | 0.625 | -10.889 | -2.130 | 0.625 | 14.889 | 31.223 | 0.684 |
| 12.367 | 16.577 | 0.625 | -11.943 | -2.800 | 0.625 | 15.023 | 32.109 | 0.684 |
| 12.776 | 18.684 | 0.625 | -12.928 | -3.392 | 0.625 | 15.134 | 32.851 | 0.684 |
| 13.152 | 20.679 | 0.625 | -13.827 | -3.923 | 0.625 | 15.223 | 33.455 | 0.684 |
| 13.501 | 22.551 | 0.625 | -14.630 | -4.407 | 0.625 | 15.292 | 33.928 | 0.684 |
| 13.820 | 24.295 | 0.625 | -15.319 | -4.866 | 0.625 | 15.342 | 34.282 | 0.684 |
| 14.107 | 25.902 | 0.625 | -15.864 | -5.335 | 0.625 | 15.325 | 34.528 | 0.684 |
| 14.364 | 27.367 | 0.625 | -16.243 | -5.816 | 0.625 | 15.225 | 34.648 | 0.684 |
| 14.589 | 28.687 | 0.625 | -16.501 | -6.252 | 0.625 | 15.116 | 34.698 | 0.684 |
| 14.786 | 29.860 | 0.625 | -16.662 | -6.625 | 0.625 | 15.031 | 34.707 | 0.684 |
| 14.954 | 30.885 | 0.625 | -16.762 | -6.920 | 0.625 | 14.922 | 34.684 | 0.684 |
| 15.095 | 31.764 | 0.625 | -16.818 | -7.136 | 0.625 | 14.791 | 34.568 | 0.684 |
| 15.211 | 32.499 | 0.625 | -16.847 | -7.278 | 0.625 | 14.696 | 34.331 | 0.684 |
| 15.304 | 33.098 | 0.625 | -17.017 | -7.543 | 0.684 | 14.589 | 34.007 | 0.684 |
| 15.377 | 33.567 | 0.625 | -17.038 | -7.682 | 0.684 | 14.452 | 33.595 | 0.684 |
| 14.282 | 33.087 | 0.684 | -12.107 | -15.772 | 0.744 | 9.867 | 23.098 | 0.744 |
| 14.071 | 32.484 | 0.684 | -10.552 | -16.633 | 0.744 | 9.097 | 21.660 | 0.744 |
| 13.818 | 31.782 | 0.684 | -8.740 | -17.248 | 0.744 | 8.262 | 20.179 | 0.744 |
| 13.519 | 30.982 | 0.684 | -6.718 | -17.514 | 0.744 | 7.366 | 18.665 | 0.744 |
| 13.170 | 30.086 | 0.684 | -4.567 | -17.317 | 0.744 | 6.412 | 17.126 | 0.744 |
| 12.767 | 29.096 | 0.684 | -2.407 | -16.629 | 0.744 | 5.404 | 15.574 | 0.744 |
| 12.307 | 28.018 | 0.684 | -0.338 | -15.483 | 0.744 | 4.348 | 14.016 | 0.744 |
| 11.787 | 26.856 | 0.684 | 1.563 | -13.936 | 0.744 | 3.250 | 12.462 | 0.744 |
| 11.205 | 25.618 | 0.684 | 3.255 | -12.062 | 0.744 | 2.116 | 10.922 | 0.744 |
| 10.558 | 24.311 | 0.684 | 4.731 | -9.944 | 0.744 | 0.953 | 9.404 | 0.744 |
| 9.845 | 22.944 | 0.684 | 6.004 | -7.646 | 0.744 | -0.232 | 7.917 | 0.744 |
| 9.067 | 21.527 | 0.684 | 7.085 | -5.218 | 0.744 | -1.435 | 6.472 | 0.744 |
| 8.225 | 20.067 | 0.684 | 8.005 | -2.708 | 0.744 | -2.649 | 5.079 | 0.744 |
| 7.322 | 18.575 | 0.684 | 8.796 | -0.154 | 0.744 | -3.871 | 3.749 | 0.744 |
| 6.362 | 17.059 | 0.684 | 9.488 | 2.414 | 0.744 | -5.096 | 2.492 | 0.744 |
| 5.349 | 15.529 | 0.684 | 10.098 | 4.974 | 0.744 | -6.321 | 1.321 | 0.744 |
| 4.291 | 13.993 | 0.684 | 10.652 | 7.502 | 0.744 | -7.536 | 0.243 | 0.744 |
| 3.192 | 12.460 | 0.684 | 11.163 | 9.980 | 0.744 | -8.736 | -0.733 | 0.744 |
| 2.060 | 10.940 | 0.684 | 11.639 | 12.394 | 0.744 | -9.908 | -1.607 | 0.744 |
| 0.902 | 9.440 | 0.684 | 12.083 | 14.729 | 0.744 | -11.037 | -2.383 | 0.744 |
| -0.277 | 7.969 | 0.684 | 12.496 | 16.972 | 0.744 | -12.113 | -3.063 | 0.744 |
| -1.470 | 6.538 | 0.684 | 12.872 | 19.114 | 0.744 | -13.118 | -3.663 | 0.744 |
| -2.673 | 5.156 | 0.684 | 13.216 | 21.141 | 0.744 | -14.036 | -4.200 | 0.744 |
| -3.881 | 3.834 | 0.684 | 13.535 | 23.045 | 0.744 | -14.857 | -4.688 | 0.744 |
| -5.091 | 2.585 | 0.684 | 13.827 | 24.816 | 0.744 | -15.564 | -5.149 | 0.744 |
| -6.299 | 1.419 | 0.684 | 14.090 | 26.449 | 0.744 | -16.128 | -5.617 | 0.744 |
| -7.499 | 0.345 | 0.684 | 14.324 | 27.938 | 0.744 | -16.522 | -6.100 | 0.744 |
| -8.684 | -0.629 | 0.684 | 14.531 | 29.279 | 0.744 | -16.790 | -6.541 | 0.744 |
| -9.842 | -1.499 | 0.684 | 14.710 | 30.470 | 0.744 | -16.957 | -6.920 | 0.744 |
| -10.959 | -2.272 | 0.684 | 14.863 | 31.511 | 0.744 | -17.060 | -7.219 | 0.744 |
| -12.024 | -2.948 | 0.684 | 14.992 | 32.403 | 0.744 | -17.118 | -7.439 | 0.744 |
| -13.019 | -3.544 | 0.684 | 15.098 | 33.150 | 0.744 | -17.148 | -7.584 | 0.744 |
| -13.929 | -4.078 | 0.684 | 15.182 | 33.758 | 0.744 | -17.309 | -7.799 | 0.803 |
| -14.741 | -4.562 | 0.684 | 15.248 | 34.235 | 0.744 | -17.330 | -7.940 | 0.803 |
| -15.441 | -5.021 | 0.684 | 15.297 | 34.591 | 0.744 | -17.349 | -8.146 | 0.803 |
| -15.996 | -5.489 | 0.684 | 15.279 | 34.839 | 0.744 | -17.359 | -8.466 | 0.803 |
| -16.383 | -5.970 | 0.684 | 15.179 | 34.959 | 0.744 | -17.329 | -8.910 | 0.803 |
| -16.647 | -6.409 | 0.684 | 15.069 | 35.009 | 0.744 | -17.211 | -9.479 | 0.803 |
| -16.811 | -6.785 | 0.684 | 14.983 | 35.018 | 0.744 | -16.967 | -10.163 | 0.803 |
| -16.913 | -7.082 | 0.684 | 14.873 | 34.992 | 0.744 | -16.600 | -10.959 | 0.803 |
| -16.970 | -7.301 | 0.684 | 14.743 | 34.873 | 0.744 | -16.094 | -11.856 | 0.803 |
| -17.000 | -7.444 | 0.684 | 14.651 | 34.633 | 0.744 | -15.424 | -12.835 | 0.803 |
| -17.166 | -7.684 | 0.744 | 14.545 | 34.305 | 0.744 | -14.565 | -13.865 | 0.803 |
| -17.186 | -7.824 | 0.744 | 14.410 | 33.888 | 0.744 | -13.490 | -14.903 | 0.803 |
| -17.206 | -8.029 | 0.744 | 14.243 | 33.375 | 0.744 | -12.177 | -15.890 | 0.803 |
| -17.217 | -8.347 | 0.744 | 14.036 | 32.764 | 0.744 | .10.603 | -16.736 | 0.803 |
| -17.188 | -8.789 | 0.744 | 13.787 | 32.054 | 0.744 | -8.774 | -17.331 | 0.803 |
| -17.073 | -9.356 | 0.744 | 13.493 | 31.244 | 0.744 | -6.738 | -17.572 | 0.803 |
| -16.833 | -10.037 | 0.744 | 13.149 | 30.336 | 0.744 | -4.579 | -17.350 | 0.803 |
| -16.470 | -10.830 | 0.744 | 12.752 | 29.334 | 0.744 | -2.413 | -16.641 | 0.803 |
| -15.971 | -11.725 | 0.744 | 12.299 | 28.242 | 0.744 | -0.339 | -15.480 | 0.803 |
| -15.311 | -12.703 | 0.744 | 11.786 | 27.064 | 0.744 | 1.569 | -13.921 | 0.803 |
| -14.463 | -13.734 | 0.744 | 11.211 | 25.809 | 0.744 | 3.271 | -12.040 | 0.803 |
| -13.403 | -14.776 | 0.744 | 10.572 | 24.484 | 0.744 | 4.761 | -9.915 | 0.803 |
| 6.051 | -7.611 | 0.803 | -0.168 | 7.854 | 0.803 | 12.721 | 17.265 | 0.862 |
| 7.149 | -5.176 | 0.803 | -1.384 | 6.400 | 0.803 | 13.071 | 19.432 | 0.862 |
| 8.085 | -2.658 | 0.803 | -2.614 | 5.001 | 0.803 | 13.388 | 21.485 | 0.862 |
| 8.892 | -0.094 | 0.803 | -3.853 | 3.666 | 0.803 | 13.682 | 23.411 | 0.862 |
| 9.596 | 2.485 | 0.803 | -5.098 | 2.409 | 0.803 | 13.951 | 25.204 | 0.862 |
| 10.215 | 5.056 | 0.803 | -6.342 | 1.239 | 0.803 | 14.193 | 26.856 | 0.862 |
| 10.774 | 7.597 | 0.803 | -7.576 | 0.162 | 0.803 | 14.408 | 28.363 | 0.862 |
| 11.286 | 10.088 | 0.803 | -8.794 | -0.813 | 0.803 | 14.598 | 29.720 | 0.862 |
| 11.759 | 12.515 | 0.803 | -9.981 | -1.686 | 0.803 | 14.762 | 30.925 | 0.862 |
| 12.196 | 14.864 | 0.803 | -11.123 | -2.463 | 0.803 | 14.902 | 31.978 | 0.862 |
| 12.597 | 17.121 | 0.803 | -12.210 | -3.145 | 0.803 | 15.019 | 32.881 | 0.862 |
| 12.960 | 19.276 | 0.803 | -13.223 | -3.749 | 0.803 | 15.115 | 33.637 | 0.862 |
| 13.291 | 21.316 | 0.803 | -14.149 | -4.291 | 0.803 | 15.191 | 34.251 | 0.862 |
| 13.598 | 23.232 | 0.803 | -14.975 | -4.784 | 0.803 | 15.251 | 34.734 | 0.862 |
| 13.879 | 25.014 | 0.803 | -15.688 | -5.249 | 0.803 | 15.295 | 35.094 | 0.862 |
| 14.132 | 26.657 | 0.803 | -16.258 | -5.719 | 0.803 | 15.277 | 35.345 | 0.862 |
| 14.358 | 28.155 | 0.803 | -16.658 | -6.203 | 0.803 | 15.177 | 35.467 | 0.862 |
| 14.556 | 29.504 | 0.803 | -16.930 | -6.647 | 0.803 | 15.065 | 35.515 | 0.862 |
| 14.729 | 30.703 | 0.803 | -17.099 | -7.029 | 0.803 | 14.977 | 35.522 | 0.862 |
| 14.876 | 31.750 | 0.803 | -17.203 | -7.331 | 0.803 | 14.866 | 35.494 | 0.862 |
| 14.999 | 32.647 | 0.803 | -17.261 | -7.553 | 0.803 | 14.740 | 35.367 | 0.862 |
| 15.101 | 33.399 | 0.803 | -17.292 | -7.698 | 0.803 | 14.653 | 35.121 | 0.862 |
| 15.182 | 34.010 | 0.803 | -17.448 | -7.889 | 0.862 | 14.551 | 34.786 | 0.862 |
| 15.245 | 34.490 | 0.803 | -17.468 | -8.031 | 0.862 | 14.422 | 34.360 | 0.862 |
| 15.291 | 34.848 | 0.803 | -17.487 | -8.238 | 0.862 | 14.261 | 33.835 | 0.862 |
| 15.274 | 35.098 | 0.803 | -17.496 | -8.559 | 0.862 | 14.062 | 33.211 | 0.862 |
| 15.173 | 35.219 | 0.803 | -17.463 | -9.005 | 0.862 | 13.823 | 32.485 | 0.862 |
| 15.062 | 35.268 | 0.803 | -17.342 | -9.576 | 0.862 | 13.539 | 31.656 | 0.862 |
| 14.975 | 35.276 | 0.803 | -17.095 | -10.262 | 0.862 | 13.208 | 30.728 | 0.862 |
| 14.865 | 35.249 | 0.803 | -16.724 | -11.061 | 0.862 | 12.824 | 29.702 | 0.862 |
| 14.737 | 35.126 | 0.803 | -16.211 | -11.960 | 0.862 | 12.385 | 28.583 | 0.862 |
| 14.647 | 34.883 | 0.803 | -15.533 | -12.940 | 0.862 | 11.888 | 27.376 | 0.862 |
| 14.543 | 34.552 | 0.803 | -14.662 | -13.968 | 0.862 | 11.330 | 26.090 | 0.862 |
| 14.410 | 34.130 | 0.803 | -13.574 | -15.001 | 0.862 | 10.708 | 24.731 | 0.862 |
| 14.246 | 33.611 | 0.803 | -12.244 | -15.979 | 0.862 | 10.021 | 23.308 | 0.862 |
| 14.042 | 32.994 | 0.803 | -10.653 | -16.811 | 0.862 | 9.267 | 21.831 | 0.862 |
| 13.797 | 32.276 | 0.803 | -8.808 | -17.385 | 0.862 | 8.448 | 20.311 | 0.862 |
| 13.507 | 31.457 | 0.803 | -6.760 | -17.603 | 0.862 | 7.565 | 18.756 | 0.862 |
| 13.169 | 30.539 | 0.803 | -4.593 | -17.359 | 0.862 | 6.620 | 17.178 | 0.862 |
| 12.777 | 29.525 | 0.803 | -2.422 | -16.633 | 0.862 | 5.618 | 15.586 | 0.862 |
| 12.330 | 28.420 | 0.803 | -0.343 | -15.458 | 0.862 | 4.562 | 13.992 | 0.862 |
| 11.824 | 27.228 | 0.803 | 1.572 | -13.889 | 0.862 | 3.460 | 12.404 | 0.862 |
| 11.256 | 25.958 | 0.803 | 3.283 | -12.000 | 0.862 | 2.315 | 10.834 | 0.862 |
| 10.624 | 24.616 | 0.803 | 4.788 | -9.871 | 0.862 | 1.134 | 9.291 | 0.862 |
| 9.927 | 23.212 | 0.803 | 6.094 | -7.562 | 0.862 | -0.076 | 7.785 | 0.862 |
| 9.164 | 21.755 | 0.803 | 7.211 | -5.122 | 0.862 | -1.310 | 6.327 | 0.862 |
| 8.336 | 20.254 | 0.803 | 8.166 | -2.597 | 0.862 | -2.561 | 4.926 | 0.862 |
| 7.446 | 18.719 | 0.803 | 8.991 | -0.026 | 0.862 | -3.823 | 3.593 | 0.862 |
| 6.496 | 17.161 | 0.803 | 9.711 | 2.561 | 0.862 | -5.091 | 2.340 | 0.862 |
| 5.491 | 15.589 | 0.803 | 10.343 | 5.142 | 0.862 | -6.358 | 1.175 | 0.862 |
| 4.436 | 14.012 | 0.803 | 10.910 | 7.693 | 0.862 | -7.615 | 0.105 | 0.862 |
| 3.337 | 12.440 | 0.803 | 11.426 | 10.196 | 0.862 | -8.853 | -0.864 | 0.862 |
| 2.199 | 10.883 | 0.803 | 11.898 | 12.635 | 0.862 | -10.058 | -1.733 | 0.862 |
| 1.029 | 9.351 | 0.803 | 12.329 | 14.996 | 0.862 | -11.214 | -2.508 | 0.862 |
| -12.312 | -3.191 | 0.862 | 15.053 | 33.285 | 0.964 | -17.631 | -7.742 | 0.964 |
| -13.333 | -3.801 | 0.862 | 15.139 | 34.048 | 0.964 | -17.661 | -7.891 | 0.964 |
| -14.265 | -4.349 | 0.862 | 15.208 | 34.669 | 0.964 | -17.758 | -8.028 | 1.000 |
| -15.096 | -4.850 | 0.862 | 15.262 | 35.155 | 0.964 | -17.776 | -8.172 | 1.000 |
| -15.812 | -5.321 | 0.862 | 15.301 | 35.519 | 0.964 | -17.794 | -8.381 | 1.000 |
| -16.388 | -5.794 | 0.862 | 15.283 | 35.772 | 0.964 | -17.799 | -8.706 | 1.000 |
| -16.793 | -6.280 | 0.862 | 15.183 | 35.896 | 0.964 | -17.760 | -9.156 | 1.000 |
| -17.067 | -6.728 | 0.862 | 15.069 | 35.942 | 0.964 | -17.630 | -9.732 | 1.000 |
| -17.237 | -7.112 | 0.862 | 14.980 | 35.948 | 0.964 | -17.377 | -10.424 | 1.000 |
| -17.342 | -7.417 | 0.862 | 14.869 | 35.918 | 0.964 | -16.997 | -11.228 | 1.000 |
| -17.400 | -7.641 | 0.862 | 14.746 | 35.784 | 0.964 | -16.471 | -12.133 | 1.000 |
| -17.430 | -7.787 | 0.862 | 14.664 | 35.532 | 0.964 | -15.774 | -13.114 | 1.000 |
| -17.678 | -7.994 | 0.964 | 14.566 | 35.192 | 0.964 | -14.879 | -14.140 | 1.000 |
| -17.697 | -8.137 | 0.964 | 14.442 | 34.757 | 0.964 | -13.760 | -15.165 | 1.000 |
| -17.715 | -8.346 | 0.964 | 14.289 | 34.223 | 0.964 | -12.396 | -16.125 | 1.000 |
| -17.721 | -8.670 | 0.964 | 14.098 | 33.588 | 0.964 | -10.769 | -16.927 | 1.000 |
| -17.684 | -9.119 | 0.964 | 13.868 | 32.848 | 0.964 | -8.891 | -17.462 | 1.000 |
| -17.556 | -9.694 | 0.964 | 13.596 | 32.004 | 0.964 | -6.817 | -17.636 | 1.000 |
| -17.305 | -10.384 | 0.964 | 13.277 | 31.057 | 0.964 | -4.631 | -17.350 | 1.000 |
| -16.926 | -11.187 | 0.964 | 12.907 | 30.011 | 0.964 | -2.446 | -16.589 | 1.000 |
| -16.404 | -12.090 | 0.964 | 12.483 | 28.869 | 0.964 | -0.353 | -15.387 | 1.000 |
| -15.711 | -13.071 | 0.964 | 12.003 | 27.638 | 0.964 | 1.577 | -13.795 | 1.000 |
| -14.823 | -14.097 | 0.964 | 11.462 | 26.324 | 0.964 | 3.312 | -11.891 | 1.000 |
| -13.712 | -15.124 | 0.964 | 10.859 | 24.935 | 0.964 | 4.849 | -9.751 | 1.000 |
| -12.356 | -16.088 | 0.964 | 10.190 | 23.480 | 0.964 | 6.195 | -7.432 | 1.000 |
| -10.738 | -16.897 | 0.964 | 9.456 | 21.970 | 0.964 | 7.357 | -4.982 | 1.000 |
| -8.869 | -17.443 | 0.964 | 8.654 | 20.415 | 0.964 | 8.358 | -2.444 | 1.000 |
| -6.801 | -17.628 | 0.964 | 7.786 | 18.825 | 0.964 | 9.226 | 0.142 | 1.000 |
| -4.621 | -17.352 | 0.964 | 6.853 | 17.212 | 0.964 | 9.984 | 2.749 | 1.000 |
| -2.439 | -16.600 | 0.964 | 5.858 | 15.587 | 0.964 | 10.646 | 5.351 | 1.000 |
| -0.350 | -15.405 | 0.964 | 4.806 | 13.960 | 0.964 | 11.234 | 7.925 | 1.000 |
| 1.576 | -13.818 | 0.964 | 3.700 | 12.344 | 0.964 | 11.759 | 10.454 | 1.000 |
| 3.305 | -11.919 | 0.964 | 2.545 | 10.750 | 0.964 | 12.228 | 12.920 | 1.000 |
| 4.833 | -9.781 | 0.964 | 1.346 | 9.188 | 0.964 | 12.645 | 15.309 | 1.000 |
| 6.169 | -7.465 | 0.964 | 0.111 | 7.670 | 0.964 | 13.013 | 17.608 | 1.000 |
| 7.320 | -5.018 | 0.964 | -1.155 | 6.206 | 0.964 | 13.332 | 19.803 | 1.000 |
| 8.309 | -2.483 | 0.964 | -2.443 | 4.807 | 0.964 | 13.617 | 21.882 | 1.000 |
| 9.165 | 0.099 | 0.964 | -3.748 | 3.482 | 0.964 | 13.880 | 23.834 | 1.000 |
| 9.913 | 2.701 | 0.964 | -5.062 | 2.242 | 0.964 | 14.121 | 25.650 | 1.000 |
| 10.568 | 5.297 | 0.964 | -6.375 | 1.095 | 0.964 | 14.336 | 27.324 | 1.000 |
| 11.150 | 7.865 | 0.964 | -7.676 | 0.044 | 0.964 | 14.527 | 28.850 | 1.000 |
| 11.673 | 10.387 | 0.964 | -8.954 | -0.907 | 0.964 | 14.695 | 30.224 | 1.000 |
| 12.142 | 12.847 | 0.964 | -10.192 | -1.761 | 0.964 | 14.839 | 31.445 | 1.000 |
| 12.563 | 15.228 | 0.964 | -11.376 | -2.528 | 0.964 | 14.962 | 32.512 | 1.000 |
| 12.937 | 17.519 | 0.964 | -12.495 | -3.209 | 0.964 | 15.064 | 33.426 | 1.000 |
| 13.265 | 19.707 | 0.964 | -13.529 | -3.828 | 0.964 | 15.148 | 34.191 | 1.000 |
| 13.558 | 21.779 | 0.964 | -14.469 | -4.389 | 0.964 | 15.214 | 34.814 | 1.000 |
| 13.829 | 23.725 | 0.964 | -15.305 | -4.906 | 0.964 | 15.266 | 35.302 | 1.000 |
| 14.077 | 25.535 | 0.964 | -16.025 | -5.392 | 0.964 | 15.303 | 35.667 | 1.000 |
| 14.299 | 27.203 | 0.964 | -16.607 | -5.872 | 0.964 | 15.285 | 35.921 | 1.000 |
| 14.497 | 28.724 | 0.964 | -17.021 | -6.362 | 0.964 | 15.185 | 36.045 | 1.000 |
| 14.670 | 30.094 | 0.964 | -17.297 | -6.816 | 0.964 | 15.071 | 36.092 | 1.000 |
| 14.819 | 31.311 | 0.964 | -17.469 | -7.206 | 0.964 | 14.982 | 36.097 | 1.000 |
| 14.946 | 32.374 | 0.964 | -17.573 | -7.515 | 0.964 | 14.870 | 36.066 | 1.000 |
| 14.749 | 35.929 | 1.000 | | | | | | |
| 14.667 | 35.676 | 1.000 | | | | | | |
| 14.572 | 35.334 | 1.000 | | | | | | |
| 14.449 | 34.896 | 1.000 | | | | | | |
| 14.298 | 34.359 | 1.000 | | | | | | |
| 14.111 | 33.719 | 1.000 | | | | | | |
| 13.884 | 32.975 | 1.000 | | | | | | |
| 13.616 | 32.125 | 1.000 | | | | | | |
| 13.301 | 31.172 | 1.000 | | | | | | |
| 12.936 | 30.119 | 1.000 | | | | | | |
| 12.518 | 28.970 | 1.000 | | | | | | |
| 12.043 | 27.729 | 1.000 | | | | | | |
| 11.508 | 26.406 | 1.000 | | | | | | |
| 10.911 | 25.007 | 1.000 | | | | | | |
| 10.250 | 23.541 | 1.000 | | | | | | |
| 9.522 | 22.020 | 1.000 | | | | | | |
| 8.726 | 20.452 | 1.000 | | | | | | |
| 7.863 | 18.850 | 1.000 | | | | | | |
| 6.934 | 17.225 | 1.000 | | | | | | |
| 5.943 | 15.588 | 1.000 | | | | | | |
| 4.891 | 13.950 | 1.000 | | | | | | |
| 3.784 | 12.324 | 1.000 | | | | | | |
| 2.626 | 10.721 | 1.000 | | | | | | |
| 1.421 | 9.153 | 1.000 | | | | | | |
| 0.177 | 7.631 | 1.000 | | | | | | |
| -1.100 | 6.165 | 1.000 | | | | | | |
| -2.401 | 4.766 | 1.000 | | | | | | |
| -3.721 | 3.444 | 1.000 | | | | | | |
| -5.051 | 2.209 | 1.000 | | | | | | |
| -6.380 | 1.068 | 1.000 | | | | | | |
| -7.696 | 0.024 | 1.000 | | | | | | |
| -8.987 | -0.920 | 1.000 | | | | | | |
| -10.238 | -1.769 | 1.000 | | | | | | |
| -11.432 | -2.532 | 1.000 | | | | | | |
| -12.558 | -3.213 | 1.000 | | | | | | |
| -13.596 | -3.835 | 1.000 | | | | | | |
| -14.541 | -4.399 | 1.000 | | | | | | |
| -15.378 | -4.923 | 1.000 | | | | | | |
| -16.099 | -5.414 | 1.000 | | | | | | |
| -16.684 | -5.896 | 1.000 | | | | | | |
| -17.100 | -6.388 | 1.000 | | | | | | |
| -17.377 | -6.844 | 1.000 | | | | | | |
| -17.549 | -7.236 | 1.000 | | | | | | |
| -17.654 | -7.547 | 1.000 | | | | | | |
| -17.711 | -7.775 | 1.000 | | | | | | |
| -17.741 | -7.925 | 1.000 | | | | | | |

Dans le tableau ci-dessus, le plan Z' = 0 correspond à un plan P0 de référence, situé à la base du profil, c'est-à-dire au niveau de la plate-forme intérieure 12 de l'aube 10.

Comme indiqué au début de la présente description, le profil aérodynamique selon l'invention est sensiblement identique au profil nominal défini dans le tableau ci-dessus, c'est-à-dire qu'il varie très légèrement par rapport à ce profil nominal, en étant en particulier défini dans une enveloppe de ± 1 mm dans une direction normale à la surface du profil nominal et/ou en ayant des coordonnées X, Y comprises dans la plage de ± 5 % par rapport aux coordonnées X,Y du profil nominal.

Les coordonnées du tableau ci-dessus sont données à partir d'une valeur Z' = 0 dans le plan de référence P0. La coordonnée Z' est sans dimension, c'est-à-dire que pour un point P1, situé à une distance D du plan P0 (D est donc mesurée selon l'axe Z), la valeur de Z' est D/H où H représente la hauteur totale du profil, mesuré à partir du plan P0 jusqu'au sommet du profil. Bien entendu, en multipliant, dans le tableau ci-dessus, la coordonnée Z' par la hauteur H, on obtient les coordonnées complètes de l'aube.

Dans le tableau ci-dessus, le profil est caractérisé par 17 coupes à coordonnée Z' constante, pour lesquelles les coordonnées X et Y sont précisées. Dans chaque plan de coupe à coordonnées Z' constante, la section du profil est donnée par une courbe continue et lissée qui relie chaque point (X,Y). Entre chaque plan de coupe, le profil est interpolé de manière à générer un profil homogène.

Une aube de turbine, en particulier pour distributeur fixe de turbine, présentant un profil aérodynamique tel que défini ci-dessus, en référence au tableau 1, permet d'optimiser l'écoulement d'air au voisinage du profil aérodynamique et la déviation de l'écoulement de l'air sur la roue mobile entraînant l'arbre de la turbomachine.

L'invention concerne également une turbine comprenant une couronne d'aubes fixes de distributeur comportant entre 32 et 40 aubes présentant chacune un profil aérodynamique tel que décrit ci-dessus.

L'invention concerne également une turbomachine 3, telle que représentée sur la figure 2, équipée d'une turbine 2 comportant des aubes présentant des profils aérodynamiques selon l'invention.

## Revendications

1. Profil aérodynamique d'aube de turbine, **caractérisé en ce que**, à froid et à l'état non revêtu, ledit profil (16) est sensiblement identique à un profil nominal déterminé par les coordonnées cartésiennes X, Y, Z' données dans le tableau 1, dans lequel la coordonnée Z' est le quotient D/H où D est la distance du point considéré à un plan P0 de référence, situé à la base du profil nominal et H est la hauteur de ce profil, mesurée depuis ledit plan de référence jusqu'au sommet de l'aube, les mesures D et H étant prises radialement par rapport à l'axe de la turbine, tandis que la coordonnée X est mesurée dans la direction axiale de la turbine.

2. Profil aérodynamique selon la revendication 1, **caractérisé en ce que** ledit profil est défini dans une enveloppe de ± 1mm dans une direction normale à la surface du profil nominal.

3. Profil aérodynamique selon la revendication 1 ou 2, **caractérisé en ce que** les coordonnées X, Y dudit profil sont comprises dans la plage de ± 5% par rapport aux coordonnées X,Y du profil nominal.

4. Aube de turbine, **caractérisé en ce qu'**elle présente un profil aérodynamique selon l'une quelconque des revendications 1 à 3.

5. Turbine, **caractérisée en ce qu'**elle comporte des aubes de turbine présentant des profils aérodynamiques selon l'une quelconque des revendications 1 à 3.

6. Turbine selon la revendication 5, **caractérisée en ce qu'**elle comporte une couronne d'aubes fixes de distributeur comportant entre 32 et 40 aubes présentant chacune un profil aérodynamique selon l'une quelconque des revendications 1 à 3.

7. Turbomachine équipée d'une turbine (2) comportant des aubes présentant des profils aérodynamiques selon l'une quelconque des revendications 1 à 3.
